# EUROPEAN PATENT SPECIFICATION

(11) **EP 2 197 235 B1**
(45) Date of publication and mention of the grant of the patent: **09.01.2013**
(21) Application number: 09166259.3
(22) Date of filing: 23.07.2009
(51) Int. Cl.: H04W 72/12

(54) **Terminal device in a carrier aggregation based mobile communication system and buffer status reporting method thereof**
Endgerät eines auf Carrier-Aggregation basierten Mobilkommunikationssystems und zugehöriges Verfahren zum Berichten des Pufferspeicherstatus
Dispositif de terminal d'un système de communication mobile à base d'agrégation de porteuse et son procédé pour le rapport d'état de la memoire tampon

(30) Priority: 11.12.2008 KR 20080125865
(43) Date of publication of application: 16.06.2010
(60) Divisional application: 12192166.2
(73) Proprietor: Electronics and Telecommunications Research Institute, Daejeon 305-700 (KR)
(72) Inventor: Shin, Jae Wook, 305-773, Daejeon (KR); Jung, Kwang Ryul, 305-721, Daejeon (KR); Lim, Soon Yong, 305-755, Daejeon (KR); Park, Ae-soon, 305-755, Daejeon (KR)
(74) Representative: Betten & Resch

(56) References cited:
- ERICSSON: "Carrier aggregation in LTE-Advanced", 3GPP DRAFT; R1-082468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110739,
- MAC RAPPORTEURS (QUALCOMM EUROPE ET AL: "E-UTRA MAC protocol specification update", 3GPP DRAFT; INTERNALR2-081389 CR0001 TO 36321-800 WITHHL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080223, 23 February 2008 (2008-02-23), XP050138489,
- NTT DOCOMO ET AL: "MAC PDU structure for LTE", 3GPP DRAFT; R2-070280, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133369,
- ERICSSON: "Impact of Carrier Aggregation on the L2 protocol architecture for LTE Rel-10", 3GPP DRAFT; R2-092957 L2 PROTOCOL ARCHITECTURE FOR LTE REL-10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340752,
- POTEVIO: "Consideratios on BSR in Carrier Aggregation", 3GPP DRAFT; R2-101042 CONSIDERATION ON BSR IN CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 12 February 2010 (2010-02-12), XP050421360,

## Description

### BACKGROUND OF THE INVENTION

The present invention disclosed herein relates to a mobile communication system, and more particularly, to a terminal device of a carrier aggregation based mobile communication system and a buffer status reporting method thereof.

Recently, a long term evolution (LTE) system using an OFDM scheme is being standardized by the third generation partnership project (3GPP) as a next generation mobile communication system substituting for the universal mobile telecommunication system (UMTS) that is the third generation mobile communication standards. The UMTS is the third generation asynchronous mobile communication system using the wideband code division multiple access (CDMA) based on the global system for mobile communications (GSM) and the general packet radio services (GPRS) that are Europe mobile communication systems.

In the packet transmission-based 3GPP LTE mobile communication system, a base station (hereinafter, referred to eNB) is in charge of both upward and downward packet schedulings on an air interface. In case of the uplink, the eNB performs the packet scheduling based on buffer status information in a terminal (hereinafter, referred to UE). For this, the UE must frequently report the uplink buffer status information to the eNB. Based on the buffer status information received from the UE, the eNB predicts uplink radio resources necessary to the corresponding UE, and assigns the resources to the UE.

The buffer status reporting (BSR) in the LTE system is performed in the medium access control (MAC) layer between the UE and the eNB. That is, when the BSR is triggered at the transmission time interval (TTI), a BSR control element is included in medium access control-packet data unit (MAC-PDU), or transport block (TB) to be delivered to the eNB, In this case, the BSR control element represents the amount of packets remaining in the transmission buffer of the UE after the configuration of the corresponding MAC-PDU, by unit of a logical channel group. The eNB estimates the amount of packets remaining in the transmission buffer of the current UE using the buffer status information received from the UE.

While the typical 3GPP LTE system is based on a single carrier, the LTE-advanced system, which satisfies the requirements of the IMT-advanced system and is under discussion in the 3GPP, tries to enhance the system capacity and the transmission rate by supporting multi-carrier through the carrier aggregation. Hereinafter, a carrier usable between the UE and the eNB will be referred to as a component carrier (CC). The eNB can assign uplink radio resources defined on one or more CCs to a specific UE according to the availability of the entire radio resource and the traffic status of the UE, When assigned with the uplink radio resource for two or more CCs at a specific time interval, the UE can transmits the MAC-PDU one by one through each CC at the same transmission time interval (TTI). Accordingly, the BSR procedure defined on the single carrier needs to be newly defined in consideration of the availability status of the muiti-CC.

3GPP document "Carrier aggregation in LTE-Advanced" from ERICSSON, 24 June 2008, discloses a method of a terminal device in a carrier aggregation - based communication system wherein a single data stream is divided across different component carriers. This can be done either at the MAC layer, or at the physical layer.

### SUMMARY OF THE INVENTION

The present invention provides a buffer status reporting methods of a terminal device in a carrier aggregation-based mobile communication system according to claim 1.

The present invention also provides a terminal device in a carrier aggregation-based mobile communication system according to claim 8.

### BRIEF DESCRIPTION OF THE FIGURES

The accompanying figures are included to provide a further understanding of the present invention, and are incorporated in and constitute a part of this specification. The drawings illustrate exemplary embodiments of the present invention and, together with the description, serve to explain principles of the present invention. In the figures:

FIG, 1 is a block diagram illustrating a network structure of an LTE mobile communication system;

FIG. 2 is a diagram illustrating a buffer status reporting (BSR) procedure of a user equipment (UE) in an LTE mobile communication system;

FIGS. 3A and 3B are block diagrams illustrating BSR control elements in an LTE mobile communication system;

FIG. 4 is a diagram illustrating a UE of a carrier aggregation mobile communication system according to an embodiment of the present invention;

FIG. 5 is a flowchart illustrating a control procedure for a BSR considering the status of multi-component carrier (CC) in an LTE-advanced system of a carrier aggregation scheme;

FIG. 6 is a diagram illustrating a link procedure between a UE and an eNode B (eNB) according to an embodiment of the present invention;

FIG. 7 is a diagram illustrating a configuration of a medium access control-protocol data unit (MAC-PDU) according to an embodiment of the present invention.

### DETAILED DESCRIPTION OF PREFERRED EMBODIMENTS

It should be construed that foregoing general illustrations and following detailed descriptions are exemplified and an additional explanation of claimed inventions is provided. Reference numerals are indicated in detail in preferred embodiments of the present invention, and their examples are represented in reference drawings. In every possible case, like reference numerals are used for referring to the same or similar elements in the description and drawings. Hereinafter, embodiments of the present invention will be described in detail with reference to the accompanying drawings so that the technical spirit of the present invention could easily be understood by a person skilled in the art.

Hereinafter, operation principles of the present invention will be described in detail with reference to the accompanying drawings. Detailed descriptions related to well-known functions or configurations will be ruled out in order not to unnecessarily obscure subject matters of the present invention, Also, terms used herein are defined in consideration of the functions of the present invention, and may be varied according to the custom and the intention of user or operator. Therefore, definitions thereof should be formulated based on the overall descriptions of the present invention.

Although an LTE-advanced mobile communication system is exemplified to describe the present invention, the present invention can be similarly applied to all carrier aggregation-based mobile communication systems using a base station (hereinafter, referred to as eNB) scheduling. The LTE-advanced system using the present invention uses the eNB scheduling. In a communication system using the eNB scheduling, a terminal (hereinafter, referred to as UE) must be assigned with the transmission resource from the eNB before transmitting reciprocal data. For this, the UE reports its own buffer status. Accordingly, in the present invention, the buffer status reporting (BSR) is performed including a different element according to whether the transmission resource is assigned to the DE or not.

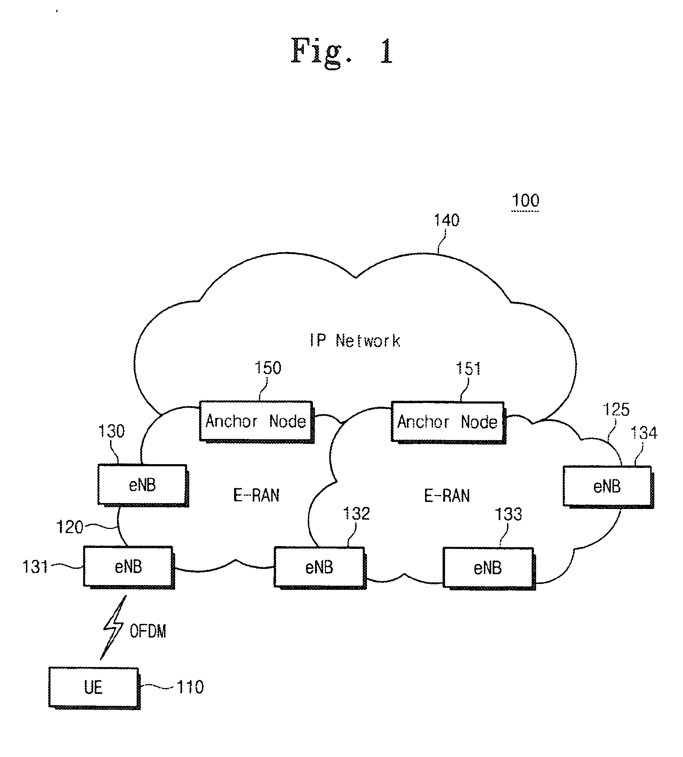

FIG. 1 is a block diagram illustrating a network structure of an LTE mobile communication system 100. Referring to FIG. 1, evolved radio access networks (E-RAN) 120 and 125 are simplified a two-node structure of evolved node B (eNB) 130, 131, 132, 133 and 134, and anchor nodes 150 and 151. A user equipment (hereinafter, referred to as UE) 110 is connected to an Internet protocol network 140 via the E-RAN.

The eNBs 130, 131, 132, 133 and 134 are connected to the UE 110 with a radio channel. In order to support all user traffics via a shared channel including a real-time service like a voice over IP (VoIP) transmitting a voice packet via the Internet Protocol in the LTE system, a device for collecting and scheduling the status information of the UE 110 is required. The eNBs 130, 131, 132, 133 and 134 are in charge of such a scheduling, In order to realize the transmission rate of up to 100 Mbps, the LTE may use the orthogonal frequency division multiplexing (OFDM) as a radio access technology in a bandwidth of about 20 MHz. Also, an adaptive modulation & coding (hereinafter, referred to as AMC) determining the modulation scheme and the channel coding rate according to the channel status of the UE 110 can be applied. In a communication system using the eNB scheduling according to an embodiment of the present invention, the UE 110 must report its own buffer status to the eNB to be assigned with the transmission resource. When data is generated at first, the UE 110 reports the buffer status to the eNB to be assigned with the transmission resource, and performs a periodic BSR while transmitting data.

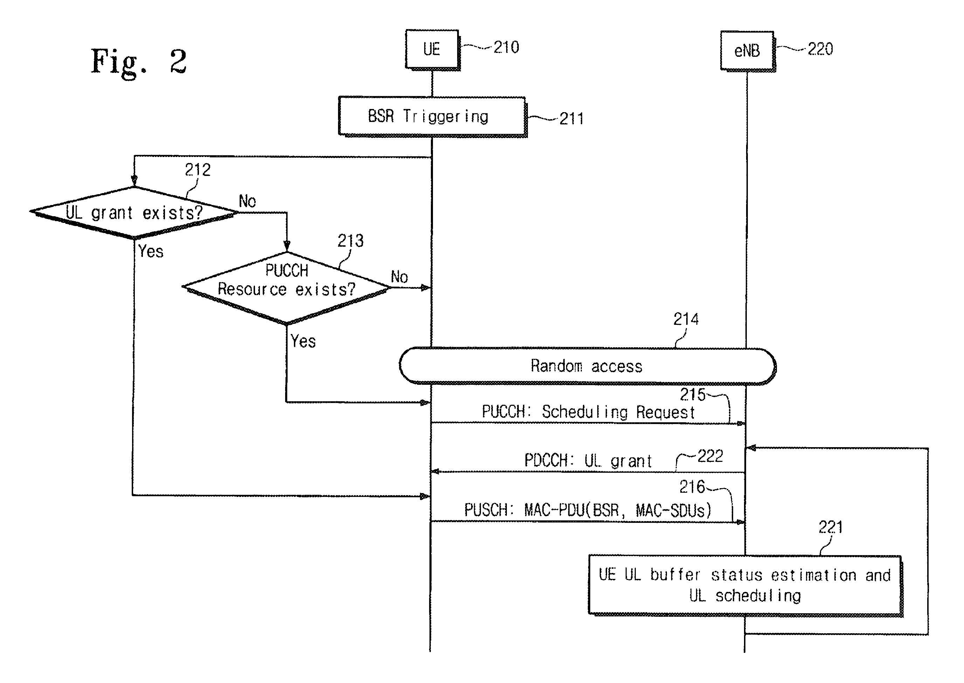

FIG. 2 is a diagram illustrating a BSR procedure of a UE (110 in FIG, 1) in an LTE mobile communication system. The BSR triggering of the UE 110 is defined into three types. First, there is a periodic BSR performing the BSR during a specific period. Second, there is a normal BSR occurring when a packet having higher priority than a packet in the transmission buffer of the current UE 110 is newly generated and buffered, or when a serving cell is modified due to a handover. Third, there is a padding BSR using the BSR control element instead of padding bits when configuring the medium access control-protocol data unit (MAC-PDU), That is, the periodic BSR is triggered according to the expiration of the BSR timer, the normal BSR is triggered according to the data receipt status on the buffer, and the padding BSR is determined according to the size of the padding bits when configuring the MAC-PDU.

Referring again to FIG. 2, the uplink BSR control procedure in the LTE system is shown. In step 211, if a packet to be transmitted is inputted into the transmission buffer of a UE 210, the UE 210 triggers BSR for the packet data transmission. Next, in step 212, it is determined whether a radio resource allocation from the uplink (UL grant) exists at the time when the BSR is triggered.

If there is a UL grant, in step 216, buffer status information (BSR control element) is included in the MAC-PDU to be delivered an eNB 220. If the UL grant is not received from the eNB 220, in step 213, the UE 210 checks if there is a resource of a physical uplink control channel (PUCCH).

If there is a resource of the PUCCH, the UE 210 transmits a scheduling request (SR) to the eNB 220 to request for UL grant necessary for the transmission of the BSR. If there is no resource of the PUCCH though the SR procedure is triggered in the UE 210, the UE 210 uses a random access procedure 214. The UE 210 is synchronized with the UE 220 according to the random access procedure 214, and assigned with the PUCCH resource.

Then, the UE 210 performs the SR procedure. If the eNB 220 receives the SR, an uplink radio resource (i.e., radio resource on the physical uplink shared channel (PUSCH)) necessary for the transmission of the BSR is assigned to the UE 210. In step 222, the allocation information related thereto is transmitted to the UE 210 through a physical downlink control channel (PDCCH). If receiving the radio resource allocation notification (or, UL grant) necessary for the transmission of the BSR from the eNB 220 through the PDCCH, the UE 210 generates the MAC-PDU including the BSR control element to transmit it to the eNB 220. If receiving the BSR from the UE 210, the eNB 220 calculates current uplink transmission buffer occupancy of the UE 210, and makes a schedule of uplink radio resource for the TIE 210 to transmit the current uplink transmission buffer occupancy in step 221. Then, in step 222, the eNB 220 notifies the UE 210 of the schedule information through the PDCCH. If receiving the radio resource allocation notification through the PDCCH, in step 216, the UE 210 transmits buffered data (MAC-SDU) to the eNB 220. In this case, the MAC-SDU includes the updated uplink buffer status information. Based on the received uplink buffer status information, the eNB 220 remakes a schedule of new uplink radio resource for the UE 210.

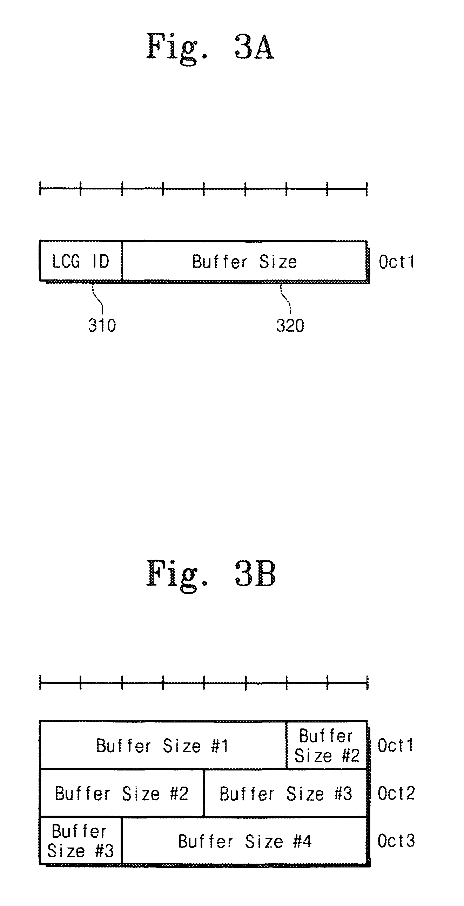

FIGS. 3A and 3B are block diagrams illustrating BSR control elements for a BSR included in a MAC-PDU between a UE and an eNB in an LTE mobile communication system.

The BSR is provided by unit of logical channel group, and currently defined into four logical channel groups. The BSR control element includes a long BSR control element (Long-BSR CE), a short BSR control element (Short-BSR CE), and a truncated-BSR control element (Truncated-BSR CE), One MAC-PDU may include only one of the above described BSR control elements.

FIG. 3A is a diagram illustrating the structure of the Short-BSR CE and the Truncated-BSR CE, The Short-BSR CE or the Truncated-BSR CE includes one octet (8 bits). The first 2 bits 310 is a field indicating a logical channel group ID (LCG ID) where the BSR is performed. The field of the remaining 6 bits 320 indicates the size of packets remaining in the buffer corresponding to the total LCG after the MAC-PDU is generated.

FIG. 3B is a diagram illustrating the structure of the Long-BSR CE. The Long-BSR CE includes three octets (24 bits). Accordingly, each of 6 bits indicates a buffer size corresponding to each of four LCGs. The logical channel or LCGs means a unit of reporting the buffer status. For example, if n logical channels are set to a UE, this means that there are at most n buffer status elements.

Therefore, the Long-BSR CE designates the buffer sizes with respect to all LCGs, and the Short-BSR CE and the Truncated-BSR CE designate the buffer size with respect to one LCG. In case of the normal or periodic BSR, if currently buffered data exist only in one LCG, the Short-BSR CE is used. If the buffered data exist in two or more LCGs, the Long-BSR CE is used.

In case of the padding BSR, the Short-BSR CE, the Truncated-BSR CE, or the Long-BSR CE is used according to the number of paddable bits. The difference between the Short-BSR CE and the Truncated-BSR. CE will be described as follows. The Short-BSR CE is used when there is buffered data in only one LCG. and the Truncated-BSR CE is used when there is buffered data in two or more LCGs but the buffer information is provided to only LCG having the highest priority. The buffer information included in the BSR CE indicates the amount of packets remaining in the transmission buffer of the UE after the corresponding MAC-PDU is configured.

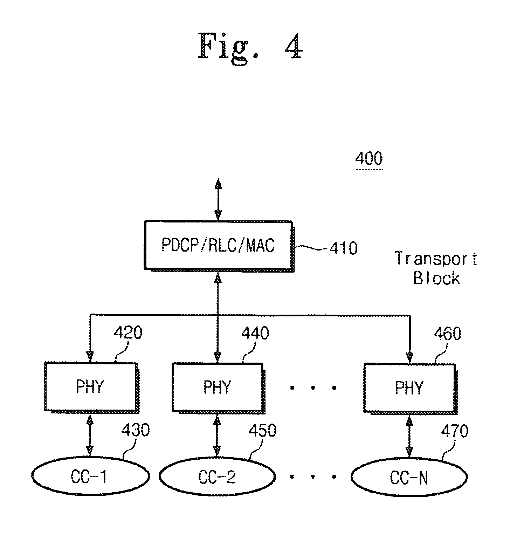

FIG. 4 is a diagram illustrating a UE of a carrier aggregation-based LTE-advanced system according to an embodiment of the present invention. Referring to FIG. 4, the uplink transmission characteristic to the eNB of the MAC-PDU in carrier aggregation system according to an embodiment of the present invention will be described,

Services such as radio resource control (RRC), voice service Internet Protocol (VoIP; not shown), file transfer protocol (FTP; not shown) may be provided in a UE. Each service includes packet data convergence protocol (PDCP) entity, and radio link control (RLC) entity. The PDCP entity performs a security-related role and a compression. The RLC entity performs a role of assigning upper layer packet in an appropriate size, and automatic repeat request (ARQ) operation. Generally, the PDCP and the RLC are collectively referred to as a radio bearer. Also, the MAC-PDU for the uplink is configured by the MAC entity. These functions are included in a block 410.

A transmission block shows a physical function for setting a plurality of channels to simultaneously link one UE to the eNB. A channel is provided to each of component carriers 430, 450, and 470. Physical layers 420, 440, and 460 corresponding to each of component carriers 430, 450, and 470 are provided.

In a typical LTE system using a single carrier, one MAC-PDU is delivered to the eNB at every uplink transmission interval. In this case, if the BSR is triggered, a BSR CE is included in the MAC-PDU. However, when supported by the carrier aggregation as described in the drawing. The plurality of component carrier CC can be used between the UE 400 and the eNB. Accordingly, the UE can simultaneously transmit one or more MAC-PODs to the eNB at every uplink transmission interval. If the BSR procedure is triggered in such a situation, the BSR CE may be included in each of MAC-PDUs. Each of CCs includes a physical uplink control channel (PUCCH) and a physical downlink control channel (PDCCH), and a physical uplink shared channel (PUSCH).

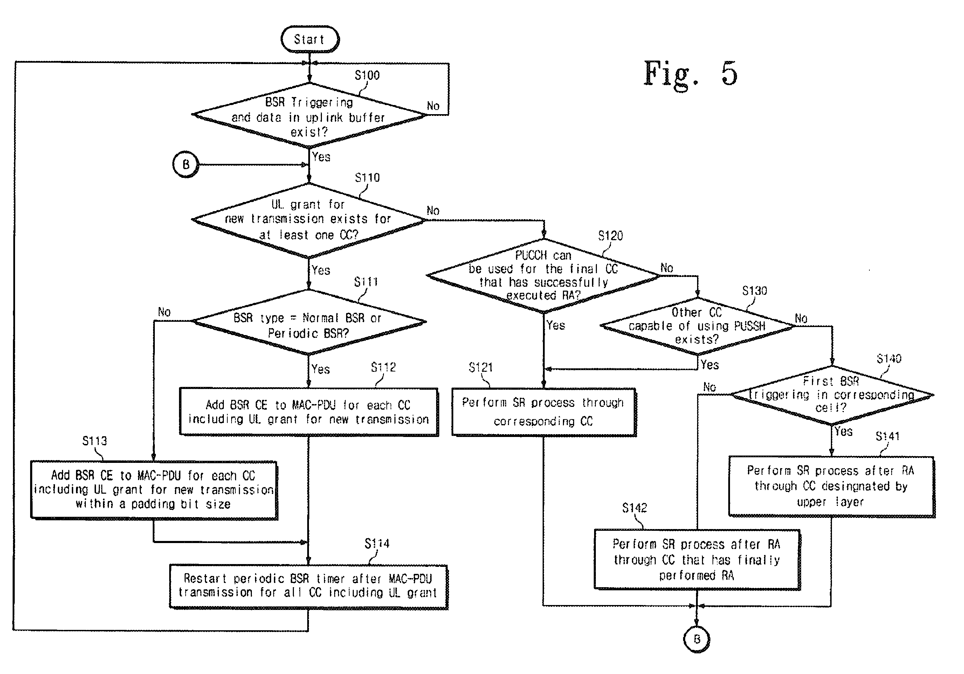

FIG. 5 is a flowchart illustrating the control procedure for a BSR considering the status of multi-component carrier (CC) in an LTE-advanced system of a carrier aggregation scheme. A procedure of the BSR performed in consideration of the status of multi-CC will be described in detail with reference to FIG. 5.

In step S100, when the control procedure is started for the BSR, the UE detects whether the BSR is triggered, and whether there is data in the uplink buffer. If the BSR is not triggered yet or there is no data in the uplink buffer, the buffer status and the triggering of the BSR are continuously monitored. If the BSR is triggered and there is data in the uplink buffer, the procedure proceeds to the next step S110 for the new transmission.

In step S110, the UE checks whether there are resource allocations (UL grant) from the eNB with respect to one or more CCs. If there are resource allocations (UL grant) for the new transmission from the eNB with respect to one or more CCs, the procedure proceeds to the next step S111 for checking the triggering type of the BSR. In step S111, a MAC-PDU is configured according to whether the triggered BSR is a normal BSR, a periodic BSR, or a padding BSR.

If the triggered BSR is the normal BSR or the periodic BSR, in step S112, a BSR CE is included in the MAC-PDU for each CC where the radio resource allocation (UL grant) from the uplink exists, On the other hand, if the triggered BSR is the padding BSR, in step S113, it is determined whether the BSR CE is included according to the size of padding bit allowable for the MAC-PDU for each CC where the radio resource allocation (UL grant) from the uplink exists. Next, the MAC-PDU configured as described above is transmitted through the assigned CC. In step S 114, a BSR timer for the periodic BSR is restarted. Next, the procedure returns to the step S 100 for checking if the BSR is triggered.

According to the above check result in the step S110, if there is no uplink resource allocation (UL grant) for the new transmission with respect to all CCs of the UE, the BSR is performed according to a random access procedure, Accordingly, in step S120, the UE checks whether the PUCCH can be used for the final CC that has successfully executed the random access. If the PUCCH can be used for the final CC executing the random access, the procedure proceeds to the step performing the scheduling request by the CC that has finally used the PUCCH. In step S121, the radio resource allocation (UL grant) from the eNB is performed according to the scheduling request.

However, if the PUCCH that the CC has finally used is unusable, in step S130, it is checked whether there is other CC capable of using the PUCCH. If there is other CC capable of using the PUCCH, in step S 121, the scheduling request is performed through the CM

On the contrary, if there is no CC capable of using the PUCCH, the procedure proceeds to the step for transmitting the scheduling request after the random access, That is, in step S140, it is checked whether the currently triggered BSR is the initial BSR in the corresponding cell. If so, in step 141, the scheduling request is performed after the random access is performed through the CC designated in the upper layer. If not, in step S 142, the scheduling request is performed after the random access is again performed through the CC that has finally performed the random access.

If the scheduling request is completed, the procedure returns to the step 110 to start to check CC where the resource allocation (UL grant) exists.

In the BSR of a typical LTE system, a periodic BSR is generated by the expiration of the BSR timer, Also, when there is no uplink radio resource (UL grant) for the new transmission, the periodic BSR triggering is ignored, and then the scheduling request is performed when a normal BSR is triggered. However, when data is repeatedly buffered through only a logical channel having the same priority without the uplink radio resource (UL grant), the normal BSR is not triggered. Accordingly, there is a limitation in that uplink data could not be transmitted. In order to overcome the limitation, according to an embodiment of the present invention, the scheduling request is performed if the uplink data is buffered though the timer is expired without the uplink radio resource (UL grant). Such an operation procedure was described in the steps S120, S121, S130, S140, S141 and S142.

The size of the MAC-PDU that can be transmitted through each CC at a specific transmission time interval (TTI) is determined by an eNB scheduler. That is, when the uplink radio resource (UL grant) is given for each CC, the size of the MAC-PDU that can be transmitted through the uplink at a specific TTI may be different for each CC. When a plurality of MAC-PDUs is configured at the same TTI, the plurality of MAC-PDUs are sequentially configured, starting from a packet buffered in the uplink logical channel. The BSR CE indicates the amount of data remaining in the uplink buffer of the UE after the corresponding MAC-PDU is configured, Accordingly, each MAC-PDU includes different buffer status information (BSI). Thus, the following limitations may be caused when different BSI is transmitted to the eNB through different CCs.

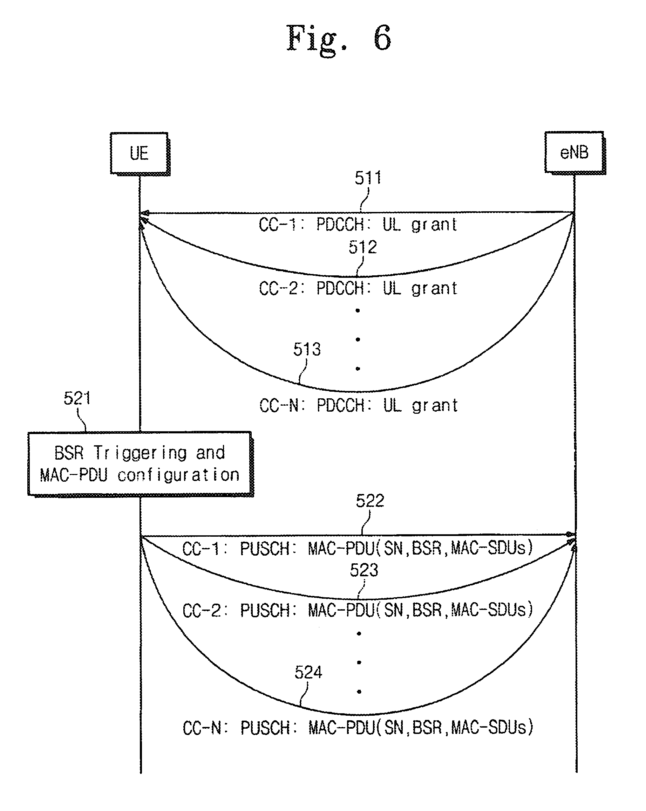

When the UE receives the uplink radio resource (UL grant) for the plurality of CCs from the eNB, the UE may vary the MAC-PDU configuration sequence according to the logical channel priority policy that is locally determined, For example, a MAC-PDU for a CC assigned with more radio resource (UL grant) than other CCs may be first configured. However, if the UE has no information on a sequence by which the MAC-PDU is configured with respect to the plurality of CCs, it is difficult to determine which BSR is the latest among the BSRs the MAC layer of the eNB receives from CCs. Generally, the buffer included in the latest BSR CE has the smallest size, but it is difficult for this rule to be always applied in a situation that new packet may be continuously buffered in the transmission buffers. This may be further complicated when an error occurs during MAC-PDU transmission. That is, a part of MAC-PDUs simultaneously transmitted through the plurality of CCs may be transmitted to the eNB without a transmission error, and other part of MAC-PDUs may not be transmitted to the MAC layer of the eNB due to the transmission error. In this case, if the latest configured MAC-PDU is transmitted to the eNB, the MAC layer of the eNB may obtain the latest BSI. On the contrary, if a transmission error occurs in the latest configured MAC-PDU while not in the other MAC-PDUs, the BSI of the EU the eNB receives may not be the latest BSI. Even in this case, the EU must determine which MAC-PDU is the latest. A method for overcoming this limitation will be described with reference to FIG. 6.

FIG. 6 is a diagram illustrating a link procedure between a UE and an eNB according to an embodiment of the present invention. A method of overcoming the limitation caused by a plurality of CCs will be described with reference to FIG, 6.

the UE configures the MAC-PDU, a configuration sequence number (SN) of the MAC-PDU corresponding to each CC is included in each MAC-PDU, This indicates that a MAC-PDU having a low SN is earlier configured than a MAC-PDU having a high SN. First, the eNB transmits uplink radio resource (UL grant) for N component carriers CC-1, CC-2,..., CC-N to the UE (511, 512, and 513). Then, the UE triggering the BSR configures a MAC-PDU including the BSR CE and the SN (521). The UE transmits each of MAC-PDUs through PUSCH allowed for each of CCs (522, 523, and 524).

The eNB receives the plurality of MAC-PDUs including the BSR CE from the UE. In this case, the eNB may recognize that the closer to the maximum value N that the SN in the BSR CE is, the more recent the BSI is. Accordingly, if the eNB normally receives a MAC-PDU having the SN of N and the MAC-PDU includes a Long-BSR and a Short-BSR, exact BSI with respect to all LCGs can be obtained. Although the eNB fails to normally receive the MAC-PDU having the SN of N, the buffer size for each LCG can be estimated based on the BSR CE included in the MAC-PDU having the highest SN among the MAC-PDUs the eNB has received,

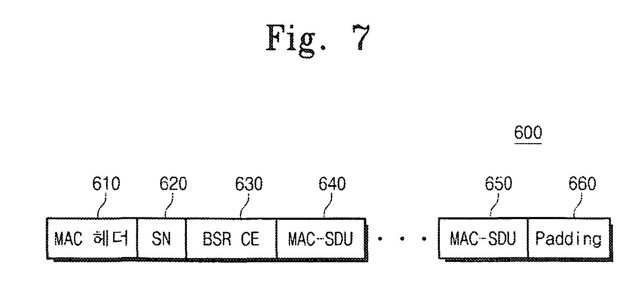

FIG. 7 is a block diagram illustrating the configuration of a MAC-PDU according to an embodiment of the present invention. Referring to FIG. 7, the MAC-PDU 600 includes a MAC header 610, a sequence number (SN) 620, a BSR CE 630, MAC-SDUs 640 and 650, and a padding bit 660. The SN 620, the BSR CE 630, the MAC-SDUs 640 and 650, and the padding bit 660 are referred to as a MAC payload.

The MAC header 610 includes control information on the MAC payload. The SN 620 indicates the configuration sequence number of the MAC-PDU corresponding to each of CCs. This means that a MAC-PDU having a lower SN is earlier configured and a MAC-PDU having a higher SN is later configured.

The BSR CE 630 is a MAC control element (CE) including buffer size information. That is, the BSR CE 630 provides information on the amount of data in the uplink buffer in the UE, The MAC CE may further include a C-RNT control element and a DRX command control element.

The MAC-SDUs 640 and 650 indicates service data delivered from the upper layer. Next, the padding bit 660 is positioned, The padding bit 660, which is optional, includes information on the buffer status that the UE notifies the eNB of.

As described above, although the descriptions of the present invention and embodiment thereof are focused on the communication performance process between the transmission side and the receipt side in order to facilitate the explanation, the transmission side may be a UE or an eNB of a network and the receipt side may be an eNB of a network or a UE. The terms set forth herein can be substituted with other terms having the same meanings. For example, the UE may be substituted with a mobile station, a mobile terminal, a communication terminal, a user device or apparatus, and the eNB may be substituted with a fixed station, Node B (NB), or a base station.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A buffer status reporting method of a terminal device (400) in a carrier aggregation-based mobile communication system, the method comprising:
obtaining a radio resource allocation for a plurality of component carriers from a base station; **characterized by**
generating a plurality of medium access control-protocol data units \MAC-PDUs (600) comprising buffer status information corresponding to the plurality of component carriers, the plurality of MAC-PDUs (600) comprising generated sequence numbers SNs(620); and
transmitting the plurality of MAC-PDUs (600) to the base station through the plurality of component carriers.

2. The buffer status reporting method of claim 1, wherein the MAC-PDU (600) comprises a buffer status reporting control element BSR CE (630) and the SN 620 in a payload field.

3. The buffer status reporting method of claim 2, wherein the MAC-PDU (600) further comprises a medium access control-service data unit MAC-SDU (650) corresponding to service data in the payload field.

4. The buffer status reporting method of claim 2 or 3, wherein the MAC-PDU (600) further comprises a padding bit region (660) in the payload field.

5. The buffer status reporting method of one of claims 1 to 4, wherein, in the configuring of the plurality of MAC-PDUs (600), the terminal device first configures a MAC-PDU (600) corresponding to a component carrier assigned with more radio resources.

6. The buffer status reporting method of one of claims 1 to 5, further comprising estimating, by the base station, the buffer status of the terminal device by referring to the buffer status information in the MAC-PDU (600) comprising the latest SN (620).

7. The buffer status reporting method of one of claims 1 to 6, wherein the plurality of MAC-PDUs (600) are collectively transmitted to the base station.

8. A terminal device in a carrier aggregation-based mobile communication system, the terminal device (400) comprising:
transmission buffers adapted to store transmission packets and corresponding to a plurality of component carriers, respectively; **characterized by**
a control unit adapted to sequentially generate a plurality of medium access control-protocol data units MAC-PDUs (600) comprising buffer status information of the transmission buffers corresponding to one or more component carriers assigned with uplink radio resource from among the plurality of component carriers, the plurality of MAC-PDUs (600) comprising generated sequence numbers SNs (620); and
a transmission unit adapted to transmit the plurality of MAC-PDUs (600) to the one or more assigned component carriers according to the control of the control unit.

## Patentansprüche

1. Verfahren zum Berichten eines Pufferspeicherstatus eines Endgeräts (400) in einem auf Carrier-Aggregation basierenden Mobilkommunikationssystem, wobei das Verfahren folgendes aufweist:
Erhalten einer Funkressourcenzuordnung für eine Vielzahl von Komponententrägern von einer Basisstation; **gekennzeichnet durch**
Erzeugen einer Vielzahl von Medienzugriffssteuerungs-Protokolldateneinheiten MAC-PDUs (600), die Pufferspeicherstatusinformationen entsprechend der Vielzahl von Komponententrägern aufweisen, wobei die Vielzahl von MAC-PDUs (600) erzeugte Sequenznummern SNs (620) aufweisen; und
Senden der Vielzahl von MAC-PDUs (600) zu der Basisstation **durch** die Vielzahl von Komponententrägern.

2. Verfahren zum Berichten eines Pufferspeicherstatus nach Anspruch 1, wobei die MAC-PDU (600) ein Pufferspeicherstatusbericht-Steuerelement BSR CE (630) und die SN 620 in einem Nutzinformationsfeld aufweist.

3. Verfahren zum Berichten eines Pufferspeicherstatus nach Anspruch 2, wobei die MAC-PDU (600) weiterhin eine Medienzugriffssteuerungs-Dienstdateneinheit MAC-SDU (650) entsprechend Dienstdaten im Nutzinformationsfeld aufweist.

4. Verfahren zum Berichten eines Pufferspeicherstatus nach Anspruch 2 oder 3, wobei die MAC-PDU (600) weiterhin einen Auffüllbitbereich (660) im Nutzinformationsfeld aufweist.

5. Verfahren zum Berichten eines Pufferspeicherstatus nach einem der Ansprüche 1 bis 4, wobei beim Konfigurieren der Vielzahl von MAC-PDUs (600) das Endgerät zuerst eine MAC-PDU (600) entsprechend einem Komponententräger, der mehreren Funkressourcen zugeordnet ist, konfiguriert.

6. Verfahren zum Berichten eines Pufferspeicherstatus nach einem der Ansprüche 1 bis 5, das weiterhin umfasst, mittels der Basisstation den Pufferspeicherstatus des Endgeräts unter Bezugnahme auf die Pufferspeicherstatusinformationen in der MAC-PDU (600), die die neueste SN (620) aufweist, zu schätzen.

7. Verfahren zum Berichten eines Pufferspeicherstatus nach einem der Ansprüche 1 bis 6, wobei die Vielzahl von MAC-PDUs (600) kollektiv zu der Basisstation gesendet werden.

8. Endgerät in einem auf Carrier-Aggregation basierenden Mobilkommunikationssystem, wobei das Endgerät (400) folgendes aufweist:
Sendepufferspeicher, die dafür eingerichtet sind, Sendepakete zu speichern, und jeweils einer Vielzahl von Komponententrägern entsprechen, **gekennzeichnet durch** eine Steuereinheit, die dafür eingerichtet ist, sequentiell eine Vielzahl von Medienzugriffssteuerungs-Protokolldateneinheiten MAC-PDUs (600) zu erzeugen, die Pufferspeicherstatusinformationen der Sendepufferspeicher entsprechend einem oder mehreren, Aufwärtsstrecken-Funkrossourcen zugeordneten Komponententrägern unter der Vielzahl von Komponententrägern aufweisen, wobei die Vielzahl von MAC-PDUs (600) erzeugte Sequenznummern SNs (620) aufweisen; und
eine Sendeeinheit, die dafür eingerichtet ist, die Vielzahl von MAC-PDUS (600) in Übereinstimmung mit der Steuerung der Steuereinheit zu dem einem oder den mehreren zugeordneten Komponententrägern zu senden.

## Revendications

1. Procédé d'établissement d'un rapport sur le statut de mémoire tampon d'un dispositif terminal (400) dans un système de communication mobile à base de regroupement de porteuses, le procédé comprenant:
l'obtention d'une allocation de ressources radio pour une pluralité de porteuses de composante à partir d'une station de base ; **caractérisé par** les étapes suivantes :
générer une pluralité d'unités de données de protocole-contrôle d'accès au support MAC-PDU (600) comprenant des informations de statut de mémoire tampon correspondant à la pluralité de porteuses de composante, la pluralité de MAC-PDU (600) comprenant des numéros de séquence SN (620) générés ; et
transmettre la pluralité de MAC-PDU (600) à la station de base par l'intermédiaire de la pluralité de porteuses de composante.

2. Procédé d'établissement d'un rapport sur le statut de mémoire tampon selon la revendication 1, dans lequel la MAC-PDU (600) comprend un élément de contrôle pour faire état d'un statut de mémoire tampon BSR CE (630) et le SN (620) dans un champ de données utiles.

3. Procédé d'établissement d'un rapport sur le statut de mémoire tampon selon la revendication 2, dans lequel la MAC-PDU (600) comprend en outre une unité de données de service-contrôle d'accès au support MAC-SDU (650) correspondant à des données de service dans le champ de données utiles.

4. Procédé d'établissement d'un rapport sur le statut de mémoire tampon selon la revendication 2 ou 3, dans lequel la MAC-PDU (600) comprend en outre une région de bit de remplissage (660) dans le champ de données utiles.

5. Procédé d'établissement d'un rapport sur le statut de mémoire tampon selon l'une des revendications 1 à 4, dans lequel, dans la configuration de la pluralité de MAC-PDU (600), le dispositif de terminal configure d'abord une MAC-PDU (600) correspondant à une porteuse de composante assignée avec plus de ressources radio.

6. Procédé d'établissement d'un rapport sur le statut de mémoire tampon selon l'une des revendications 1 à 5, comprenant en outre l'estimation, par la station de base, du statut de mémoire tampon du dispositif de terminal en se référant aux informations de statut de mémoire tampon dans la MAC-PDU (600) comprenant le SN (620) le plus récent.

7. Procédé d'établissement d'un rapport sur le statut de mémoire tampon selon l'une des revendications 1 à 6, dans lequel la pluralité de MAC-PDU (600) sont collectivement transmises à la station de base.

8. Dispositif terminal dans un système de communication mobile à base de regroupement de porteuses, le dispositif terminal (400) comprenant :
des mémoires-tampons de transmission adaptées pour stocker des paquets de transmission et correspondre à une pluralité de porteuses de composante, respectivement ; **caractérisé par**
une unité de contrôle adaptée pour générer séquentiellement une pluralité d'unités de données de protocole-contrôle d'accès au support MAC-PDU (600) comprenant des informations de statut de mémoire tampon des mémoires-tampons de transmission correspondant à une ou plusieurs porteuses de composante assignées avec une ressource radio de liaison montante parmi la pluralité de porteuses de composante, la pluralité de MAC-PDU (600) comprenant des numéros de séquence SN (620) générés ; et
une unité de transmission adaptée pour transmettre la pluralité de MAC-PDU (600) aux une ou plusieurs porteuses de composante assignées selon le contrôle de l'unité de contrôle.
